# EUROPEAN PATENT SPECIFICATION

(11) **EP 3 049 465 B1**
(45) Date of publication and mention of the grant of the patent: **07.02.2024**
(21) Application number: 14792599.4
(22) Date of filing: 26.09.2014
(51) Int. Cl.: C08K 3/22, C08K 5/134, C08K 5/3475, C08K 5/526, C08L 69/00

(54) **INFRARED REFLECTIVE DARK COLORED POLYCARBONATE COMPOSITION**
INFRAROTREFLEKTIERENDE DUNKELFARBIGE POLYCARBONATZUSAMMENSETZUNG
COMPOSITION DE POLYCARBONATE FONCÉ RÉFLÉCHISSANT LE RAYONNEMENT INFRAROUGE

(30) Priority: 26.09.2013 US 201361882967 P
(43) Date of publication of application: 03.08.2016
(73) Proprietor: SABIC Global Technologies B.V., 4612 PX Bergen op Zoom (NL)
(72) Inventor: DIEZ DIAZ, Maria del Mar, NL-4612 PX Bergen op Zoom (NL); VAN DEN BOGERD, Joshua Arie, NL-4612 PX Bergen op Zoom (NL); TERRAGNI, Matteo, NL-4612 PX Bergen op Zoom (NL); GOBBETTO, Andrea, NL-4612 PX Bergen op Zoom (NL)
(74) Representative: Algemeen Octrooi- en Merkenbureau B.V.
(86) International application number: PCT/IB2014/064877
(87) International publication number: WO 2015/044911

(56) References cited:
- US-A1- 2007 225 416
- US-A1- 2008 138 609

## Description

### BACKGROUND

The present disclosure relates to dark colored polycarbonate compositions that have reduced energy absorption when exposed to sunlight. These dark colored polycarbonate compositions include an infrared reflective additive which transmits or reflects infrared light, so that the composition thereby absorbs less of the infrared energy. The dark colored polycarbonate compositions are useful in various applications, including for forming exterior automotive parts which can be exposed to prolonged periods of direct sunlight, and for automotive glazing applications.

Polycarbonates (PC) are synthetic engineering thermoplastic resins, and are a useful class of polymers having many beneficial properties. With their strength and clarity, polycarbonate resins offer many significant advantages and are used for a number of different commercial applications, including electronic engineering (E&E) parts, mechanical parts, automotive parts, automotive glazing, and so on. However, polycarbonates, like other polymers, are subject to degradation (i.e. they discolor, lose gloss, become brittle, etc.) as a result of prolonged exposure to direct sunlight.

A number of polycarbonate formulations in the automotive industry with a black color are commercially available. The dark color of automotive parts is commonly obtained by incorporation of carbon black, or other colored dyes or pigments. However, parts which are blackened through these methods absorb light within the visual spectrum and within a significant part of the near infrared (NIR) spectrum, which causes faster heating and more energy absorption. Some dyes or pigments permit the NIR light to pass through instead of being absorbed, which results in slight improvements in heat management over the use of carbon black to form dark polycarbonates. US2008/138609 discloses an unpainted plastic automotive part comprising an infrared reflective pigment, and a thermoplastic component, wherein the infrared reflective pigment is present in a concentration sufficient to cause the unpainted plastic automotive part to reflect at least about 60% of at least one wavelength in the spectrum between about 750 nm and about 2500 nm wavelength, to have a maximum heat build-up temperature of less than about 95 °C, and to have a tensile elongation of no less than about 200%.

Further improvements against sunlight degradation are needed. It would be desirable to provide polycarbonate compositions with a dark color for use in producing exterior automotive parts having exposure to prolonged periods of direct sunlight.

### BRIEF DESCRIPTION

Disclosed herein are dark colored polycarbonate blends/compositions that have reduced energy absorption when exposed to sunlight. These dark colored polycarbonate compositions can be used to form automotive parts / glazing having exterior applications and direct sunlight exposure with improved durability and light / weather resistance.

The present invention as disclosed herein relates to a polycarbonate composition and an exterior automotive part as defined the appended claims.

In some embodiments, the infrared reflective additive of the polycarbonate composition is a complex inorganic colored pigment (CICP) comprising a mixed metal oxide.

In an embodiment, the infrared reflective additive of the polycarbonate composition is a chromium iron oxide CICP.

The infrared reflective additive of the polycarbonate composition may be either CICP Green 17, Brown 29, or Brown 35.

In a particular embodiment, the infrared reflective additive of the polycarbonate composition is CICP Brown 29.

The polycarbonate composition can have from about 0.1 wt% to about 2.0 wt% of the infrared reflective additive.

In particular embodiments, the polycarbonate composition has about 0.01 wt% to about 0.10 wt% of the heat stabilizer, from about 0.01 wt% to about 0.05 wt% of the anti-oxidant, and from about 0.01 wt% to about 0.3 wt% of the UV-additive.

In other embodiments, the heat stabilizer is tris(di-t-butylphenyl)phosphite, the anti-oxidant is octadecyl-3-(3,5-di-tertbutyl-4-hydroxyphenyl)propionate, and the UV additive is either 2-(2 hydroxy-5-t-octylphenyl)benzotriazole or bis[2-hydroxy-5-t-Octyl-3-(benzotriazol-2-yl)phenyl]-methane.

In other additional embodiments, the polycarbonate composition further includes about 0.01 wt% to about 0.3 wt% of a release agent, wherein the release agent is either (a) the palmitic/stearic acid ester of dipentaerythritol/pentaerythritol or (b) octadecanoic acid, 1 ,2,3-propanetriyl ester (CAS# 537-39-3).

In some embodiments, the polycarbonate polymer of the polycarbonate composition comprises a high molecular weight polycarbonate polymer having a Mw above 25,000 and a low molecular weight polycarbonate polymer having a Mw below 25,000.

In particular embodiments, the polycarbonate composition has an Energy Absorption (AE) of less than 85% when measured according to ISO 9050.

In some embodiments, the polycarbonate composition has an Energy Absorption (AE) of less than 80% when measured according to ISO 9050.

Also included herein are exterior automotive parts / glazing having improved sunlight resistance, made using the polycarbonates of the present disclosure.

In other additional embodiments, an automotive part for automotive glazing comprises a fixing layer comprised of a polymer or a metal, a polycarbonate layer on the fixing layer, wherein the polycarbonate layer comprises a polycarbonate polymer, an infrared reflective additive, a heat stabilizer, an anti-oxidant, and a UV-additive, and wherein the automotive part has an Energy Absorption (AE) of less than 90% when measured according to ISO 9050.

In particular embodiments, the automotive part further includes a transparent layer on the polycarbonate layer.

In some embodiments, the transparent layer is a polycarbonate layer.

In other additional embodiments, the automotive part includes an exterior weatherproofing layer on the transparent layer.

In some embodiments, the automotive part has an Energy Absorption (AE) of less than 85% when measured according to ISO 9050.

In other additional embodiments, the automotive part has an Energy Absorption (AE) of less than 80% when measured according to ISO 9050.

Also disclosed herein are polycarbonate compositions, comprising: from about 80 wt% to about 99.9 wt% of a polycarbonate polymer; from about 0.5 wt% to about 1.0 wt% of an infrared reflective additive; from about 0.01 wt% to about 0.10 wt% of a heat stabilizer; from about 0.01 wt% to about 0.10 wt% of an anti-oxidant; and from about 0.01 wt% to about 0.3 wt% of a UV-additive; wherein the polycarbonate composition has an L-value of 20 or below when measured in the CIELAB color space under DREOLL conditions, and has an Energy Absorption (AE) of less than 80% when measured according to ISO 9050.

These and other non-limiting characteristics are more particularly described below.

### BRIEF DESCRIPTION OF THE DRAWINGS

The following is a brief description of the drawings, which are presented for the purposes of illustrating the exemplary embodiments disclosed herein and not for the purposes of limiting the same.

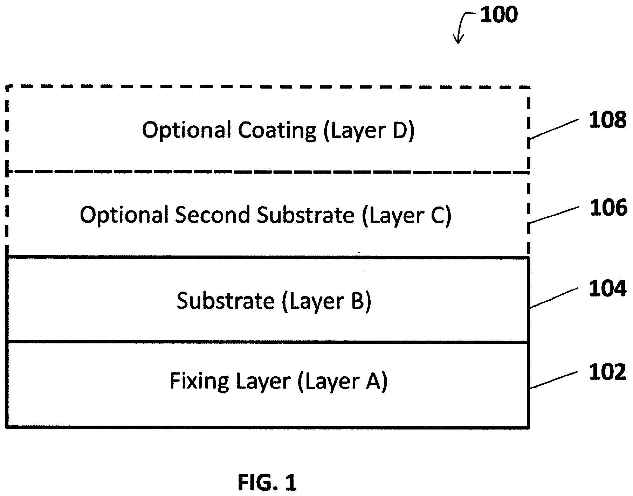

**FIG. 1** is a schematic cross-sectional diagram showing the various layers of an exterior automotive part.

### DETAILED DESCRIPTION

The present disclosure may be understood more readily by reference to the following detailed description of desired embodiments and the examples included therein. In the following specification and the claims which follow, reference will be made to a number of terms which shall be defined to have the following meanings.

The singular forms "a," "an," and "the" include plural referents unless the context clearly dictates otherwise.

As used in the specification and in the claims, the term "comprising" may include the embodiments "consisting of" and "consisting essentially of."

Numerical values in the specification and claims of this application, particularly as they relate to polymers or polymer compositions, reflect average values for a composition that may contain individual polymers of different characteristics. Furthermore, unless indicated to the contrary, the numerical values should be understood to include numerical values which are the same when reduced to the same number of significant figures and numerical values which differ from the stated value by less than the experimental error of conventional measurement technique of the type described in the present application to determine the value.

All ranges disclosed herein are inclusive of the recited endpoint and independently combinable (for example, the range of "from 2 grams to 10 grams" is inclusive of the endpoints, 2 grams and 10 grams, and all the intermediate values).

As used herein, approximating language may be applied to modify any quantitative representation that may vary without resulting in a change in the basic function to which it is related. Accordingly, a value modified by a term or terms, such as "about" and "substantially," may not be limited to the precise value specified. The modifier "about" should also be considered as disclosing the range defined by the absolute values of the two endpoints. For example, the expression "from about 2 to about 4" also discloses the range "from 2 to 4."

It should be noted that weight percentage or "wt%", is based on the total weight of the polymeric composition.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, the aldehyde group -CHO is attached through the carbon of the carbonyl group.

The term "aliphatic" refers to a linear or branched array of atoms that is not cyclic and has a valence of at least one. Aliphatic groups are defined to comprise at least one carbon atom. The array of atoms may include heteroatoms such as nitrogen, sulfur, silicon, selenium and oxygen in the backbone or may be composed exclusively of carbon and hydrogen. Aliphatic groups may be substituted or unsubstituted. Exemplary aliphatic groups include, but are not limited to, methyl, ethyl, isopropyl, isobutyl, hydroxymethyl (-CH₂OH), mercaptomethyl (-CH₂SH), methoxy, methoxycarbonyl (CHsOCO-), nitromethyl (-CH₂NO₂), and thiocarbonyl.

The term "alkyl" refers to a linear or branched array of atoms that is composed exclusively of carbon and hydrogen. The array of atoms may include single bonds, double bonds, or triple bonds (typically referred to as alkane, alkene, or alkyne). Alkyl groups may be substituted (i.e. one or more hydrogen atoms is replaced) or unsubstituted. Exemplary alkyl groups include, but are not limited to, methyl, ethyl, and isopropyl. It should be noted that alkyl is a subset of aliphatic.

The term "aromatic" refers to an array of atoms having a valence of at least one and comprising at least one aromatic group. The array of atoms may include heteroatoms such as nitrogen, sulfur, selenium, silicon and oxygen, or may be composed exclusively of carbon and hydrogen. Aromatic groups are not substituted. Exemplary aromatic groups include, but are not limited to, phenyl, pyridyl, furanyl, thienyl, naphthyl and biphenyl.

The term "aryl" refers to an aromatic radical composed entirely of carbon atoms and hydrogen atoms. When aryl is described in connection with a numerical range of carbon atoms, it should not be construed as including substituted aromatic radicals. For example, the phrase "aryl containing from 6 to 10 carbon atoms" should be construed as referring to a phenyl group (6 carbon atoms) or a naphthyl group (10 carbon atoms) only, and should not be construed as including a methylphenyl group (7 carbon atoms). It should be noted that aryl is a subset of aromatic.

The term "cycloaliphatic" refers to an array of atoms which is cyclic but which is not aromatic. The cycloaliphatic group may include heteroatoms such as nitrogen, sulfur, selenium, silicon and oxygen in the ring, or may be composed exclusively of carbon and hydrogen. A cycloaliphatic group may comprise one or more noncyclic components. For example, a cyclohexylmethyl group (C₆H₁₁CH₂-) is a cycloaliphatic functionality, which comprises a cyclohexyl ring (the array of atoms which is cyclic but which is not aromatic) and a methylene group (the noncyclic component). Cycloaliphatic groups may be substituted or unsubstituted. Exemplary cycloaliphatic groups include, but are not limited to, cyclopropyl, cyclobutyl, 1,1,4,4-tetramethylcyclobutyl, piperidinyl, and 2,2,6,6-tetramethylpiperydinyl.

The term "cycloalkyl" refers to an array of atoms which is cyclic but is not aromatic, and which is composed exclusively of carbon and hydrogen. Cycloalkyl groups may be substituted or unsubstituted. It should be noted that cycloalkyl is a subset of cycloaliphatic.

In the definitions above, the term "substituted" refers to at least one hydrogen atom on the named radical being substituted with another functional group, such as alkyl, halogen, -OH, -CN, -NO₂, -COOH, etc.

The term "perfluoroalkyl" refers to a linear or branched array of atoms that is composed exclusively of carbon and fluorine.

The term "room temperature" refers to a temperature of 23°C.

Unless specifically specified otherwise herein, the year of the standards provided herein is the most recent date of the standard as September 26, 2013.

This application claims priority to U.S. Provisional Patent Application Serial No. 61/882,967, filed September 26, 2013.

Referring to **FIG. 1**, an automotive part **100** may consist of multiple layers formed through at least one processing step. Processing steps may include 1K molding (one-time injection of one material in a mold), 2K molding (two different materials injected into a mold at different times), gluing, coating, and other process steps known to those having ordinary skill in the art. In one embodiment, the dark automotive part **100** consists of a fixing layer **102** (layer A) and a substrate layer **104** (B). The fixing layer **102** may be comprised of metal, glass, polymer, or other material upon which the substrate layer is fixed. The substrate layer **104** may comprise a polycarbonate material, for example the dark polycarbonate composition of the present disclosure. As desired, additional layers may be placed or coated upon the substrate layer.

In another embodiment, the dark automotive part **100** further includes a second substrate layer **106.** The optional second substrate layer **106** may be comprised of a transparent material, for example a different polycarbonate material.

In yet another embodiment, the dark automotive part **100** further includes a coating layer **108** deposited upon the first substrate layer **104** or the second substrate layer **106.** The optional coating layer **108** may be applied to improve weathering performance, scratch resistance, or other properties of the overall automotive part, e.g. a self-cleaning surface coating, or a SLX coating (i.e. a polycarbonate-polyester copolymer). The optional coating layer **108** may be a weathering layer.

Automotive parts exposed to sunlight will heat-up as a result of the solar radiation being absorbed. A dark part intrinsically absorbs nearly all visible light and often most of the near-infrared light, and therefore heats up quicker than a lighter-colored part. This additional heating can lead to undesired damage to the dark automotive part. For example, during the process of heating and cooling, the differences in the expansion coefficient of the different layers **102**, **104**, **106**, **108** of the dark automotive part **100** may cause delamination of the layers **102**, **104**, **106**, **108,** to occur. Automotive parts with high heat stresses may crack. The higher temperature and or faster temperature build-up within the dark automotive part **100** exposed to sunlight may cause accelerated delamination of the different layers **102**, **104, 106, 108** and thereby cause cracking in areas where in-molded stress was present.

The dark colored polycarbonate compositions of the present disclosure include an infrared reflective additive which shows high positive modification in energy absorbance for molded parts. The infrared additive enables the dark polycarbonate composition to reduce the rate or amount of heat build-up, which can lead to reduced failures at the interface of different polycarbonate layers or at higher stress positions in polycarbonate applications. Improved heat management should also decrease part failure due to general degradation processes as heat is transferred throughout all the layers of the automotive part. It should be noted that the polycarbonate compositions of the present disclosure are most useful for forming parts that are exposed to direct sunlight, as opposed to indirect exposure. For example, they are particularly useful for forming parts that make up the exterior of the automotive (i.e. body panels), and less so for parts which make up the interior passenger compartment of the automotive.

Generally, the polycarbonate compositions of the present disclosure include (A) a polycarbonate polymer; (B) an infrared reflective additive; (C) a heat stabilizer; (D) an anti-oxidant; and (E) a UV-additive. The polycarbonate composition has an Energy Absorption (AE) of less than 90% when measured according to ISO 9050.

As used herein, the term "dark" or "dark colored" is defined according to a suitable metric. One method of measuring colors is the CIELAB color space. This color space uses three dimensions, L*, a*, and b*. L* is the lightness or L-value, and can be used as a measure of the amount of light transmission through the polycarbonate resin. The values for L* range from 0 (black) to 100 (diffuse white). The dimension a* is a measure of the color between magenta (positive values) and green (negative values). The dimension b* is a measure of the color between yellow (positive values) and blue (negative values), and may also be referred to as measuring the blueness of the color or as the b-value. Colors may be measured under DREOLL conditions. For purposes of this disclosure, a dark color has an L-value of 20 or below, when measured in the CIELAB color space under DREOLL conditions. This means that the polycarbonate composition absorbs most of the light incident upon the composition.

**The** dark polycarbonate compositions of the present disclosure include a polycarbonate polymer (A). As used herein, the terms "polycarbonate" and "polycarbonate polymer" mean a polymer having repeating structural carbonate units of the formula (1): 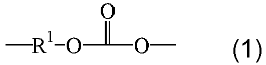 in which at least about 60 percent of the total number of R¹ groups are aromatic organic radicals and the balance thereof are aliphatic, alicyclic, or aromatic radicals. An ester unit (-COO-) is not considered a carbonate unit, and a carbonate unit is not considered an ester unit. In one embodiment, each R¹ is an aromatic organic radical, for example a radical of the formula (2):

-A¹-Y¹-A²- (2)

wherein each of A¹ and A² is a monocyclic divalent aryl radical and Y¹ is a bridging radical having one or two atoms that separate A¹ from A². In an exemplary embodiment, one atom separates A¹ from A². Illustrative non-limiting examples of radicals of this type are -O-, -S-, -S(O)-, -S(O₂)-, -C(O)-, methylene, cyclohexylmethylene, 2-[2.2.1]-bicycloheptylidene, ethylidene, isopropylidene, neopentylidene, cyclohexylidene, cyclopentadecylidene, cyclododecylidene, and adamantylidene. The bridging radical Y¹ may be a hydrocarbon group or a saturated hydrocarbon group such as methylene, cyclohexylidene, or isopropylidene.

Polycarbonates may be produced by the interfacial reaction of dihydroxy compounds having the formula HO-R¹-OH, wherein R¹ is as defined above. Dihydroxy compounds suitable in an interfacial reaction include the dihydroxy compounds of formula (A) as well as dihydroxy compounds of formula (3)

HO-A¹-Y¹-A²-OH (3)

wherein Y¹, A¹ and A² are as described above. Also included are bisphenol compounds of general formula (4): 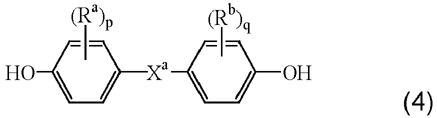 wherein R^{a} and R^{b} each represent a halogen atom or a monovalent hydrocarbon group and may be the same or different; p and q are each independently integers of 0 to 4; and X^{a} represents one of the groups of formula (5): 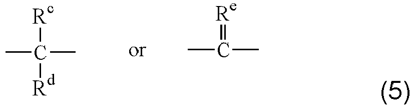 wherein R^{c} and R^{d} each independently represent a hydrogen atom or a monovalent linear or cyclic hydrocarbon group and R^{e} is a divalent hydrocarbon group.

Specific examples of the types of bisphenol compounds that may be represented by formula (3) include 1,1-bis(4-hydroxyphenyl) methane, 1,1-bis(4-hydroxyphenyl) ethane, 2,2-bis(4-hydroxyphenyl) propane (hereinafter "bisphenol-A" or "BPA"), 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, 1,1-bis(4-hydroxy-t-butylphenyl) propane, and 2-phenyl-3,3-bis(4-hydroxyphenyl) phthalimidine ("PPPBP"). Combinations comprising at least one of the foregoing dihydroxy compounds may also be used.

Branched polycarbonates are also useful, as well as blends of a linear polycarbonate and a branched polycarbonate. The branched polycarbonates may be prepared by adding a branching agent during polymerization. These branching agents include polyfunctional organic compounds containing at least three functional groups selected from hydroxyl, carboxyl, carboxylic anhydride, haloformyl, and mixtures of the foregoing functional groups. Specific examples include trimellitic acid, trimellitic anhydride, trimellitic trichloride, tris-p-hydroxy phenyl ethane (THPE), isatin-bisphenol, tris-phenol TC (1,3,5-tris((p-hydroxyphenyl)isopropyl)benzene), tris-phenol PA (4(4(1,1-bis(p-hydroxyphenyl)-ethyl) alpha, alpha-dimethyl benzyl)phenol), 4-chloroformyl phthalic anhydride, trimesic acid, and benzophenone tetracarboxylic acid. The branching agents may be added at a level of about 0.05 wt% to about 2.0 wt%.

"Polycarbonate" and "polycarbonate polymer" as used herein further includes blends of polycarbonates with other copolymers comprising carbonate chain units. An exemplary copolymer is a polyester carbonate, also known as a copolyester-polycarbonate. Such copolymers further contain, in addition to recurring carbonate chain units of the formula (1), repeating units of formula (6): 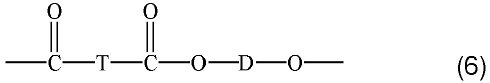 wherein D is a divalent radical derived from a dihydroxy compound, and may be, for example, a C₂₋₁₀ alkylene radical, a C₆₋₂₀ alicyclic radical, a C₆₋₂₀ aromatic radical or a polyoxyalkylene radical in which the alkylene groups contain 2 to about 6 carbon atoms, specifically 2, 3, or 4 carbon atoms; and T is a divalent radical derived from a dicarboxylic acid, and may be, for example, a C₂₋₁₀ alkylene radical, a C₆₋₂₀ alicyclic radical, a C₆₋₂₀ alkyl aromatic radical, or a C₆₋₂₀ aromatic radical. In other embodiments, dicarboxylic acids that contain a C4-C36 alkylene radical may be used to form copolymers of formula (6). Examples of such alkylene radicals include adipic acid, sebacic acid, or dodecanoic acid.

In one embodiment, D is a C₂₋₆ alkylene radical. In another embodiment, D is derived from an aromatic dihydroxy compound of formula (7): 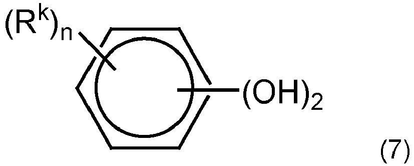 wherein each R^{k} is independently a C₁₋₁₀ hydrocarbon group, and n is 0 to 4. The halogen is usually bromine. Examples of compounds that may be represented by the formula (7) include resorcinol, substituted resorcinol compounds such as 5-methyl resorcinol, 5-phenyl resorcinol, 5-cumyl resorcinol, or the like; catechol; hydroquinone; substituted hydroquinones such as 2-methyl hydroquinone, 2-t-butyl hydroquinone, 2-phenyl hydroquinone, 2-cumyl hydroquinone, 2,3,5,6-tetramethyl hydroquinone, or the like; or combinations comprising at least one of the foregoing compounds.

Examples of aromatic dicarboxylic acids that may be used to prepare the polyesters include isophthalic or terephthalic acid, 1,2-di(p-carboxyphenyl)ethane, 4,4'-dicarboxydiphenyl ether, 4,4'-bisbenzoic acid, and mixtures comprising at least one of the foregoing acids. Acids containing fused rings can also be present, such as in 1,4-, 1,5-, or 2,6-naphthalenedicarboxylic acids. Specific dicarboxylic acids are terephthalic acid, isophthalic acid, naphthalene dicarboxylic acid, cyclohexane dicarboxylic acid, or mixtures thereof.

In other embodiments, poly(alkylene terephthalates) may be used. Specific examples of suitable poly(alkylene terephthalates) are polyethylene terephthalate) (PET), poly(1,4-butylene terephthalate) (PBT), poly(ethylene naphthanoate) (PEN), poly(butylene naphthanoate), (PBN), (polypropylene terephthalate) (PPT), polycyclohexanedimethanol terephthalate (PCT), and combinations comprising at least one of the foregoing polyesters.

Copolymers comprising alkylene terephthalate repeating ester units with other ester groups may also be useful. Useful ester units may include different alkylene terephthalate units, which can be present in the polymer chain as individual units, or as blocks of poly(alkylene terephthalates). Specific examples of such copolymers include poly(cyclohexanedimethylene terephthalate)-co-poly(ethylene terephthalate), abbreviated as PETG where the polymer comprises greater than or equal to 50 mol% of poly(ethylene terephthalate), and abbreviated as PCTG where the polymer comprises greater than 50 mol% of poly(1,4-cyclohexanedimethylene terephthalate).

Poly(cycloalkylene diester)s may also include poly(alkylene cyclohexanedicarboxylate)s. Of these, a specific example is poly(1,4-cyclohexanedimethanol-1,4-cyclohexanedicarboxylate) (PCCD), having recurring units of formula (8): 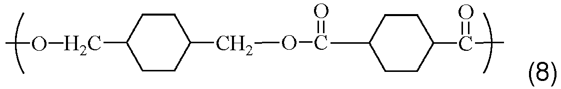 wherein, as described using formula (6), R² is a 1,4-cyclohexanedimethylene group derived from 1,4-cyclohexanedimethanol, and T is a cyclohexane ring derived from cyclohexanedicarboxylate or a chemical equivalent thereof, and may comprise the cis-isomer, the trans-isomer, or a combination comprising at least one of the foregoing isomers.

Also included in the phrase "polycarbonate polymer" are polycarbonate-polysiloxane copolymers. These copolymers comprise polycarbonate blocks and polydiorganosiloxane blocks. The polycarbonate blocks in the copolymer comprise repeating structural units of formula (1) as described above, for example wherein R¹ is of formula (2) as described above. These units may be derived from reaction of dihydroxy compounds of formula (3) as described above.

The polydiorganosiloxane blocks comprise repeating structural units of formula (9) (sometimes referred to herein as 'siloxane'): 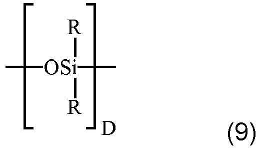 wherein each occurrence of R is same or different, and is a C₁₋₁₃ monovalent organic radical. For example, R may be a C₁-C₁₃ alkyl group, C₁-C₁₃ alkoxy group, C₂-C₁₃ alkenyl group, C₂-C₁₃ alkenyloxy group, C₃-C₆ cycloalkyl group, C₃-C₆ cycloalkoxy group, C₆-C₁₀ aryl group, C₆-C₁₀ aryloxy group, C₇-C₁₃ aralkyl group, C₇-C₁₃ aralkoxy group, C₇-C₁₃ alkaryl group, or C₇-C₁₃ alkaryloxy group. Combinations of the foregoing R groups may be used in the same copolymer. Generally, D may have an average value of 2 to about 1000, specifically about 2 to about 500, more specifically about 5 to about 200, and more specifically about 10 to about 75. Where D is of a lower value, e.g., less than about 40, it may be desirable to use a relatively larger amount of the polycarbonate-polysiloxane copolymer. Conversely, where D is of a higher value, e.g., greater than about 40, it may be necessary to use a relatively lower amount of the polycarbonate-polysiloxane copolymer. It should be noted that the siloxane blocks in a polycarbonate-polysiloxane copolymer have a distribution of chain lengths, and that D is an average value.

In one embodiment, the polydiorganosiloxane blocks are provided by repeating structural units of formula (10): 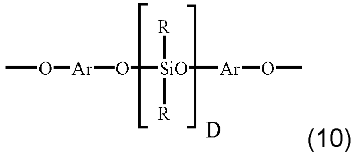 wherein D is as defined above; each R may be the same or different, and is as defined above; and Ar may be the same or different, and is a substituted or unsubstituted C₆-C₃₀ arylene radical, wherein the bonds are directly connected to an aromatic moiety. Suitable Ar groups in formula (10) may be derived from a C₆-C₃₀ dihydroxyarylene compound, for example a dihydroxyarylene compound of formula (3), (4), or (7) above. Combinations comprising at least one of the foregoing dihydroxyarylene compounds may also be used.

Such units may be derived from the corresponding dihydroxy compound of the following formula (11): 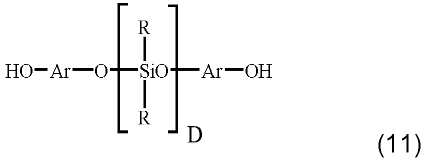 wherein Ar and D are as described above. Compounds of this formula may be obtained by the reaction of a dihydroxyarylene compound with, for example, an alpha, omega-bisacetoxypolydiorangonosiloxane under phase transfer conditions.

In another embodiment the polydiorganosiloxane blocks comprise repeating structural units of formula (12): 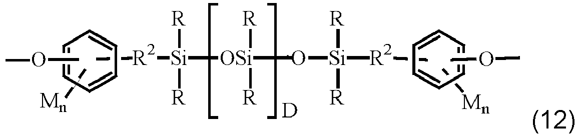 wherein R and D are as defined above. R² in formula (12) is a divalent C₂-C₈ aliphatic group. Each M in formula (12) may be the same or different, and may be cyano, nitro, C₁-C₈ alkylthio, C₁-C₈ alkyl, C₁-C₈ alkoxy, C₂-C₈ alkenyl, C₂-C₈ alkenyloxy group, Cs-C₈ cycloalkyl, C₃-C₈ cycloalkoxy, C₆-C₁₀ aryl, C₆-C₁₀ aryloxy, C₇-C₁₂ aralkyl, C₇-C₁₂ aralkoxy, C₇-C₁₂ alkaryl, or C₇-C₁₂ alkaryloxy, wherein each n is independently 0, 1, 2, 3, or 4.

In one embodiment, M is an alkyl group such as methyl, ethyl, or propyl, an alkoxy group such as methoxy, ethoxy, or propoxy, or an aryl group such as phenyl, or tolyl; R² is a dimethylene, trimethylene or tetramethylene group; and R is a C₁₋₈ alkyl, haloalkyl such as trifluoropropyl, cyanoalkyl, or aryl such as phenyl or tolyl. In another embodiment, R is methyl, or a mixture of methyl and phenyl. In still another embodiment, M is methoxy, n is one, R² is a divalent C₁-C₃ aliphatic group, and R is methyl.

These units may be derived from the corresponding dihydroxy polydiorganosiloxane (13): 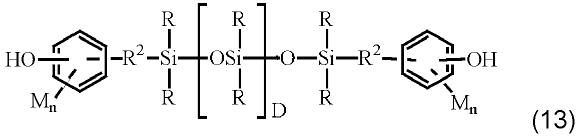 wherein R, D, M, R², and n are as described above.

Such dihydroxy polysiloxanes can be made by effecting a platinum catalyzed addition between a siloxane hydride of the formula (14), 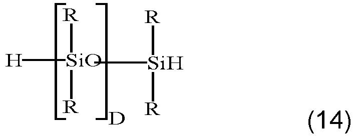 wherein R and D are as previously defined, and an aliphatically unsaturated monohydric phenol. Suitable aliphatically unsaturated monohydric phenols included, for example, eugenol, 2-alkylphenol, 4-allyl-2-methylphenol, 4-allyl-2-phenylphenol, 4-allyl-2-t-butoxyphenol, 4-phenyl-2-phenylphenol, 2-methyl-4-propylphenol, 2-allyl-4,6-dimethylphenol, 2-allyl-6-methoxy-4-methylphenol and 2-allyl-4,6-dimethylphenol. Mixtures comprising at least one of the foregoing may also be used.
The siloxane blocks may make up from greater than zero to about 25 wt% of the polycarbonate-polysiloxane copolymer, including from 4 wt% to about 25 wt%, from about 4 wt% to about 10 wt%, or from about 15 wt% to about 25 wt%, or from about 6 wt% to about 20 wt%. The polycarbonate blocks may make up from about 75 wt% to less than 100 wt% of the block copolymer, including from about 75 wt% to about 85 wt%. It is specifically contemplated that the polycarbonate-polysiloxane copolymer is a diblock copolymer. The polycarbonate-polysiloxane copolymer may have a weight average molecular weight of from about 28,000 to about 32,000. Generally, the amount of the polycarbonate-polysiloxane copolymer is sufficient for the overall polycarbonate blend to contain from about 2 wt% to about 5 wt% of siloxane. For example, if the polycarbonate-polysiloxane copolymer contains 20 wt% of siloxane, the blend may contain from about 14 to about 24 wt% of the polycarbonate-polysiloxane copolymer.

In specific embodiments of the present disclosure, the polycarbonate polymer (A) is derived from a dihydroxy compound having the structure of Formula (I): 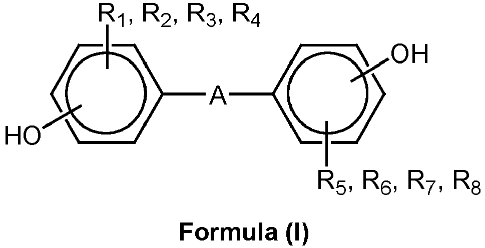 wherein R¹ through Ra are each independently selected from hydrogen, nitro, cyano, C₁-C₂₀ alkyl, C₄-C₂₀ cycloalkyl, and C₆-C₂₀ aryl; and A is selected from a bond, -O-, - S-,
-SO₂-, C₁-C₁₂ alkyl, C₆-C₂₀ aromatic, and C₆-C₂₀ cycloaliphatic.

In specific embodiments, the dihydroxy compound of Formula (I) is 2,2-bis(4-hydroxyphenyl) propane (i.e. bisphenol-A or BPA). Other illustrative compounds of Formula (I) include: 2,2-bis(4-hydroxy-3-isopropylphenyl)propane; 2,2-bis(3-t-butyl-4-hydroxyphenyl)propane; 2,2-bis(3-phenyl-4-hydroxyphenyl)propane; 1,1-bis(4-hydroxyphenyl)cyclohexane; 4,4'dihydroxy-1,1-biphenyl; 4,4'-dihydroxy-3,3'-dimethyl-1,1-biphenyl; 4,4'-dihydroxy-3,3 '-dioctyl-1,1 -biphenyl; 4,4'-dihydroxydiphenylether; 4,4'-dihydroxydiphenylthioether; and 1,3 -bis(2-(4-hydroxyphenyl)-2-propyl)benzene.

In more specific embodiments, the polycarbonate polymer (A) is a bisphenol-A homopolymer. The polycarbonate polymer may have a weight average molecular weight (Mw) of from about 15,000 to about 70,000 Daltons, according to polycarbonate standards, including a range of from about 15,000 to about 22,000 Daltons. The polycarbonate polymer can be a linear or branched polycarbonate, and in more specific embodiments is a linear polycarbonate.

In some embodiments of the present disclosure, the polycarbonate composition includes two polycarbonate polymers, i.e. a first polycarbonate polymer (A1) and a second polycarbonate polymer (A2). The two polycarbonate polymers may have the same or different monomers.

The first polycarbonate polymer has a greater weight average molecular weight than the first polycarbonate polymer. The first polycarbonate polymer may have a weight average molecular weight of above 25,000 (measured by GPC based on BPA polycarbonate standards), including above 30,000. The second polycarbonate polymer may have a weight average molecular weight of below 25,000 (measured by GPC based on BPA polycarbonate standards). In embodiments, the weight ratio of the first polycarbonate polymer to the second polycarbonate polymer is usually at least 0.5:1, and in further embodiments is at least 1:1. Note the weight ratio described here is the ratio of the amounts of the two copolymers in the blend, not the ratio of the molecular weights of the two copolymers. It is noted that the weight average molecular weight is measured by GPC based on bisphenol-A polycarbonate standards.

The weight ratio between the two polycarbonate polymers can affect the flow properties, ductility, and surface aesthetics of the final blend. The blends may include from about 80 to about 99.9 wt% of the first polycarbonate polymer and the second polycarbonate polymer combined. When blended together, the two polycarbonate polymers can have an average molecular weight of from about 25,000 to about 30,000. The polycarbonate polymer (A) can comprise from about 80 wt% to about 99.9 wt% of the overall polycarbonate composition.

Suitable polycarbonates can be manufactured by processes known in the art, such as interfacial polymerization and melt polymerization. Although the reaction conditions for interfacial polymerization may vary, an exemplary process generally involves dissolving or dispersing a dihydric phenol reactant in aqueous caustic soda or potash, adding the resulting mixture to a suitable water-immiscible solvent medium, and contacting the reactants with a carbonate precursor in the presence of a suitable catalyst such as triethylamine or a phase transfer catalyst, under controlled pH conditions, e.g., about 8 to about 10. Generally, in the melt polymerization process, polycarbonates may be prepared by co-reacting, in a molten state, the dihydroxy reactant(s) and a diaryl carbonate ester, such as diphenyl carbonate, in the presence of a transesterification catalyst in a Banbury^{®} mixer, twin screw extruder, or the like to form a uniform dispersion. Volatile monohydric phenol is removed from the molten reactants by distillation and the polymer is isolated as a molten residue.

The dark polycarbonate compositions of the present disclosure also include an infrared reflective additive (B). Generally, the infrared reflective (IR) additive is an inorganic pigment which reflects wavelengths in the range of 700 nm to 1100 nm. A pigment is a substance which is insoluble in the vehicle in which it is dispersed. Such IR pigments are typically formed by the calcination of metal hydroxides, nitrates, acetates, or oxides. Alternatively, metallic pigments can be made by coating a metal on a glass substrate. In accordance with the invention the IR additives include CI Pigment Green 17 (chromium green black hematite), CI Pigment Brown 29 (chromium iron oxide), CI Pigment Brown 35, and CI Pigment Black 30 (chrome ion nickel black spinel). These IR additives may be obtained from any suitable vendor, such as the Shepherd Color Company located in Cincinnati, Ohio. In particular embodiments, the dark polycarbonate composition includes from about 0.1 wt% to about 2.0 wt% of the infrared reflective additive, including from about 0.5 wt% to about 1.0 wt%.

The dark polycarbonate compositions of the present disclosure also include a heat stabilizer (C). The heat stabilizer may be tris(di-t-butylphenyl)phosphite or other similar composition. Other exemplary heat stabilizers include, for example, organophosphites such as triphenyl phosphite, tris-(2,6-dimethylphenyl)phosphite, tris-(mixed mono-and di-nonylphenyl)phosphite or the like; phosphonates such as dimethylbenzene phosphonate or the like, phosphates such as trimethyl phosphate, or the like, or combinations comprising at least one of the foregoing heat stabilizers. The heat stabilizer is generally used in amounts of from about 0.0001 wt% to about 1 wt% of the overall polycarbonate composition. In particular embodiments, the dark polycarbonate composition includes from about 0.01 wt% to about 0.10 wt% of the heat stabilizer.

The dark polycarbonate compositions of the present disclosure also include an antioxidant (D). The antioxidant may be octadecyl-3-(3,5-di-tertbutyl-4-hydroxyphenyl)propionate or other similar composition. Other exemplary antioxidant additives include, for example, organophosphites such as tris(nonyl phenyl)phosphite, tris(2,4-di-t-butylphenyl)phosphite (e.g., "IRGAFOS 168" or "I-168"), bis(2,4-di-t-butylphenyl)pentaerythritol diphosphite, distearyl pentaerythritol diphosphite or the like; alkylated monophenols or polyphenols; alkylated reaction products of polyphenols with dienes, such as tetrakis[methylene(3,5-di-tert-butyl-4-hydroxyhydrocinnamate)] methane, or the like; butylated reaction products of paracresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-butyl-4-hydroxyphenyl)propionate, pentaerythrityl-tetrakis[3-(3,5-di-tert-butyl-4-hydroxyphenyl)propionate or the like; amides of beta-(3,5-di-tert-butyl-4-hydroxyphenyl)-propionic acid or the like, or combinations comprising at least one of the foregoing antioxidants. The antioxidant is generally used in amounts of from about 0.0001 wt% to about 1 wt% of the overall polycarbonate composition. In particular embodiments, the dark polycarbonate composition includes from about 0.01 wt% to about 0.10 wt% of the antioxidant.

The dark polycarbonate compositions of the present disclosure also include an ultraviolet (UV) additive (E). The UV additive may be 2-(2 hydroxy-5-t-octylphenyl)benzotriazole, bis[2-hydroxy-5-t-Octyl-3-(benzotriazol-2-yl)phenyl]-methane, or other material known to one having ordinary skill in the art. Other exemplary UV absorbing additives include for example, hydroxybenzophenones; hydroxybenzotriazoles; hydroxybenzotriazines; cyanoacrylates; oxanilides; benzoxazinones; 2- (2H-benzotriazol-2-yl)-4-(1,1,3,3-tetramethylbutyl)-phenol (CYASORB^{™} 5411); 2-hydroxy-4-n-octyloxybenzophenone (CYASORB^{™} 531); 2-[4,6-bis(2,4-dimethylphenyl)-1,3,5-triazin-2-yl]- 5-(octyloxy)-phenol (CYASORB^{™} 1164); 2,2'-(1,4- phenylene)bis(4H-3,1-benzoxazin-4-one) (CYASORB^{™} UV- 3638); 1,3-bis[(2-cyano-3,3-diphenylacryloyl)oxy]-2,2-bis[[(2-cyano-3, 3-diphenylacryloyl)oxy] methyl] propane (UVINUL^{™} 3030); 2,2'-(1,4-phenylene) bis(4H-3,1-benzoxazin-4-one); 1,3-bis[(2-cyano-3,3-diphenylacryloyl)oxy] -2,2-bis[[(2-cyano-3,3-diphenylacryloyl)oxy] methyl]propane; nano-size inorganic materials such as titanium oxide, cerium oxide, and zinc oxide, all with particle size less than or equal to 100 nanometers; or the like, or combinations comprising at least one of the foregoing UV absorbers. The UV additive is generally used in amounts of from about 0.0001 wt% to about 1 wt% of the overall polycarbonate composition. In particular embodiments, the dark polycarbonate composition includes from about 0.01 wt% to about 0.3 wt% of the UV additive.

Other additives ordinarily incorporated in polycarbonate blends of this type can also be used, with the proviso that the additives are selected so as to not significantly adversely affect the desired properties of the polycarbonate. Combinations of additives can be used. Such additives can be mixed at a suitable time during the mixing of the components for forming the composition. In embodiments, one or more additives are selected from at least one of the following: mold release agents, gamma-stabilizing agents, anti-drip agents, and colorants.

The dark polycarbonate composition may further include a release agent. Any suitable release agent may be used. In some specific embodiments, the release agent is the palmitic/stearic acid ester of dipentaerythritol/pentaerythritol. In other specific embodiments, the release agent is octadecanoic acid, 1,2,3-propanetriyl ester (CAS# 537-39-3). Plasticizers, lubricants, and/or mold release agents can also be used. There is considerable overlap among these types of materials, which include, for example, phthalic acid esters such as dioctyl-4,5-epoxy-hexahydrophthalate; tris-(octoxycarbonylethyl)isocyanurate; tristearin; di- or polyfunctional aromatic phosphates such as resorcinol tetraphenyl diphosphate (RDP), the bis(diphenyl) phosphate of hydroquinone and the bis(diphenyl) phosphate of bisphenol-A; poly-alpha-olefins; epoxidized soybean oil; silicones, including silicone oils; esters, for example, fatty acid esters such as alkyl stearyl esters, e.g., methyl stearate, stearyl stearate, pentaerythritol tetrastearate (PETS), and the like; combinations of methyl stearate and hydrophilic and hydrophobic nonionic surfactants comprising polyethylene glycol polymers, polypropylene glycol polymers, poly(ethylene glycol-co-propylene glycol) copolymers, or a combination comprising at least one of the foregoing glycol polymers, e.g., methyl stearate and polyethylene-polypropylene glycol copolymer in a suitable solvent; waxes such as beeswax, montan wax, paraffin wax, or the like. Such materials are generally used in amounts of 0.001 to 1 wt%, specifically 0.01 to 0.75 wt%, more specifically 0.1 to 0.5 wt% of the overall polycarbonate composition.

Radiation stabilizers can also be present, specifically gamma-radiation stabilizers. Exemplary gamma-radiation stabilizers include alkylene polyols such as ethylene glycol, propylene glycol, 1,3-propanediol, 1,2-butanediol, 1,4-butanediol, meso-2,3-butanediol, 1,2-pentanediol, 2,3-pentanediol, 1,4-pentanediol, 1,4-hexandiol, and the like; cycloalkylene polyols such as 1,2-cyclopentanediol, 1,2-cyclohexanediol, and the like; branched alkylenepolyols such as 2,3-dimethyl-2,3-butanediol (pinacol), and the like, as well as alkoxy-substituted cyclic or acyclic alkanes. Unsaturated alkenols are also useful, examples of which include 4-methyl-4-penten-2-ol, 3-methyl-pentene-3-ol, 2-methyl-4-penten-2-ol, 2,4-dimethyl-4-pene-2-ol, and 9 to decen-1-ol, as well as tertiary alcohols that have at least one hydroxy substituted tertiary carbon, for example 2-methyl-2,4-pentanediol (hexylene glycol), 2-phenyl-2-butanol, 3-hydroxy-3-methyl-2-butanone, 2-phenyl-2-butanol, and the like, and cyclic tertiary alcohols such as 1-hydroxy-1-methyl-cyclohexane. Certain hydroxymethyl aromatic compounds that have hydroxy substitution on a saturated carbon attached to an unsaturated carbon in an aromatic ring can also be used. The hydroxy-substituted saturated carbon can be a methylol group (-CH2OH) or it can be a member of a more complex hydrocarbon group such as -CR⁴HOH or -CR⁴OH wherein R⁴ is a complex or a simple hydrocarbon. Specific hydroxy methyl aromatic compounds include benzhydrol, 1,3-benzenedimethanol, benzyl alcohol, 4-benzyloxy benzyl alcohol and benzyl benzyl alcohol. 2-Methyl-2,4-pentanediol, polyethylene glycol, and polypropylene glycol are often used for gamma-radiation stabilization. Gamma-radiation stabilizing compounds are typically used in amounts of 0.1 to 10 wt% of the overall polycarbonate composition.

Anti-drip agents may also be present. Anti-drip agents include, for example, a fibril forming or non-fibril forming fluoropolymer such as polytetrafluoroethylene (PTFE). The anti-drip agent may be encapsulated by a rigid copolymer as described above, for example SAN. PTFE encapsulated in SAN is known as TSAN. Encapsulated fluoropolymers may be made by polymerizing the encapsulating polymer in the presence of the fluoropolymer, for example, in an aqueous dispersion. TSAN may provide significant advantages over PTFE, in that TSAN may be more readily dispersed in the composition. A suitable TSAN may comprise, for example, about 50 wt% PTFE and about 50 wt% SAN, based on the total weight of the encapsulated fluoropolymer. The SAN may comprise, for example, about 75 wt% styrene and about 25 wt% acrylonitrile based on the total weight of the copolymer. Alternatively, the fluoropolymer may be pre-blended in some manner with a second polymer, such as for, example, an aromatic polycarbonate resin or SAN to form an agglomerated material for use as an anti-drip agent. Either method may be used to produce an encapsulated fluoropolymer. The anti-drip agent can be present in an amount of from about 0.05 wt% to about 1 wt% of the overall polycarbonate composition.

A dye additive is present in the polycarbonate composition in order to offset any color that may be present in the polycarbonate resin and to provide desired color to the customer. A pigment can also be present in order to offset any color that may be present in the polycarbonate resin and to provide desired color to the customer. Useful pigments can include, for example, inorganic pigments such as metal oxides and mixed metal oxides such as zinc oxide, iron oxides, or the like; sulfides such as zinc sulfides, or the like; aluminates; sodium sulfo-silicates sulfates, chromates, or the like; carbon blacks; zinc ferrites; ultramarine blue; organic pigments such as azos, di-azos, quinacridones, perylenes, naphthalene tetracarboxylic acids, flavanthrones, isoindolinones, tetrachloroisoindolinones, anthraquinones, enthrones, dioxazines, phthalocyanines, and azo lakes; Pigment Red 101, Pigment Red 122, Pigment Red 149, Pigment Red 177, Pigment Red 179, Pigment Red 202, Pigment Violet 29, Pigment Blue 15, Pigment Blue 60, Pigment Green 7, Pigment Yellow 119, Pigment Yellow 147, Pigment Yellow 150, and Pigment Brown 24; or combinations comprising at least one of the foregoing pigments. Pigments are generally used in amounts of about 0.00001 to about 1.0 wt% of the polycarbonate composition.

Exemplary dyes are generally organic materials and include, for example, coumarin dyes such as coumarin 460 (blue), coumarin 6 (green), nile red or the like; lanthanide complexes; hydrocarbon and substituted hydrocarbon dyes; polycyclic aromatic hydrocarbon dyes; scintillation dyes such as oxazole or oxadiazole dyes; aryl- or heteroaryl-substituted poly (C2-8) olefin dyes; carbocyanine dyes; indanthrone dyes; phthalocyanine dyes; oxazine dyes; carbostyryl dyes; napthalenetetracarboxylic acid dyes; porphyrin dyes; bis(styryl)biphenyl dyes; acridine dyes; anthraquinone dyes such as Solvent Green 3; cyanine dyes; methine dyes; arylmethane dyes; azo dyes; indigoid dyes, thioindigoid dyes, diazonium dyes; nitro dyes; quinone imine dyes; aminoketone dyes; tetrazolium dyes; thiazole dyes; perylene dyes, perinone dyes such as Solvent Red 135; bis-benzoxazolylthiophene (BBOT); triarylmethane dyes; xanthene dyes; thioxanthene dyes; naphthalimide dyes; lactone dyes; fluorophores such as anti-stokes shift dyes which absorb in the near infrared wavelength and emit in the visible wavelength, or the like; luminescent dyes such as 7-amino-4-methylcoumarin; 3-(2'-benzothiazolyl)-7-diethylaminocoumarin; 2-(4-biphenylyl)-5-(4-t-butylphenyl)-1,3,4-oxadiazole; 2,5-bis-(4-biphenylyl)-oxazole; 2,2'-dimethyl-p-quaterphenyl; 2,2-dimethyl-p-terphenyl; 3,5,3ʺʺ,5ʺʺ-tetra-t-butyl-p-quinquephenyl; 2,5-diphenylfuran; 2,5-diphenyloxazole; 4,4'-diphenylstilbene; 4-dicyanomethylene-2-methyl-6-(p-dimethylaminostyryl)-4H-pyran; 1,1'-diethyl-2,2'-carbocyanine iodide; 3,3'-diethyl-4,4',5,5'-dibenzothiatricarbocyanine iodide; 7-dimethylamino-1-methyl-4-methoxy-8-azaquinolone-2; 7-dimethylamino-4-methylquinolone-2; 2-(4-(4-dimethylaminophenyl)-1,3-butadienyl)-3-ethylbenzothiazolium perchlorate; 3-diethylamino-7-diethyliminophenoxazonium perchlorate; 2-(1-naphthyl)-5-phenyloxazole; 2,2'-p-phenylen-bis(5-phenyloxazole); rhodamine 700; rhodamine 800; pyrene, chrysene, rubrene, coronene, or the like; or combinations comprising at least one of the foregoing dyes. Dyes are generally used in amounts of about 0.00001 to about 1.0 wt% of the polycarbonate composition. In some particular embodiments, a mixture of Solvent Green 3 and Solvent Red 135 are used.

In embodiments, the polycarbonate compositions of the present disclosure comprise from about 80 wt% to about 99.9 wt% of the polycarbonate polymer (A); from about 0.1 wt% to about 2.0 wt% of the infrared reflective additive (B); from about 0.01 wt% to about 0.10 wt% of the heat stabilizer (C); from about 0.01 wt% to about 0.10 wt% of the antioxidant (D); and from about 0.01 wt% to about 0.3 wt% of the UV additive (E). The dark polycarbonate composition may further include from about 0.01 wt% to 0.3 wt% of a release agent.

In additional embodiments, the polycarbonate compositions of the present disclosure comprise from about 80 wt% to about 99.9 wt% of the polycarbonate polymer (A); from about 0.5 wt% to about 1.0 wt% of the infrared reflective additive (B); from about 0.01 wt% to about 0.10 wt% of the heat stabilizer (C); from about 0.01 wt% to about 0.10 wt% of the antioxidant (D); and from about 0.01 wt% to about 0.3 wt% of the UV additive (E). The dark polycarbonate composition may further include from about 0.01 wt% to 0.3 wt% of a release agent.

In more specific embodiments, the polycarbonate polymer (A) comprises a high molecular weight bisphenol-A polycarbonate polymer having a Mw above 25,000 and a low molecular weight bisphenol-A polycarbonate polymer having a Mw below 25,000; the infrared reflective additive (B) is CI Pigment Brown 29; the heat stabilizer (C) is tris(di-t-butylphenyl)phosphite; the antioxidant (D) is octadecyl-3-(3,5-di-t-butyl-4-hydroxyphenyl)propionate; and the UV additive (E) is either 2-(2 hydroxy-5-t-octylphenyl)benzotriazole or bis[2-hydroxy-5-t-octyl-3-(benzotriazol-2-yl)phenyl]-methane.

The polycarbonate compositions of the present disclosure have a combination of dark color and reduced energy absorption.

The polycarbonate compositions of the present disclosure have an L-value of 20 or less, or in other words have a dark color. The L-value is measured according to DREOLL conditions in the CIELAB color space relative to CIE standard illuminant D50. As used here DREOLL conditions are D50 illumination; CIE LAB Equations; 10 degree observer; reflective mode; specular component excluded (SCE); ultraviolet excluded; big viewport using Macbeth ColorEye^{™} 7000A spectrophotometer color.

The polycarbonate compositions of the present disclosure have an energy absorption (Ae) of less than 90%, when measured according to ISO 9050. In more specific embodiments, the Ae is less than 85%, or less than 80%. This reflects a 10% or more improvement over conventional compositions.

In some embodiments, the polycarbonate compositions of the present disclosure have an L-value of 20 or less, and have an energy absorption (Ae) of less than 90%. In other embodiments, the polycarbonate compositions of the present disclosure have an L-value of 20 or less, and have an energy absorption (Ae) of less than 85%. In other embodiments, the polycarbonate compositions of the present disclosure have an L-value of 20 or less, and have an energy absorption (Ae) of less than 80%.

The polycarbonate compositions of the present disclosure may have any combination of these properties, and any combination of the listed values for these properties. It should be noted that some of the properties are measured using articles made from the polycarbonate composition; however, such properties are described as belonging to the polycarbonate composition for ease of reference.

The polycarbonate compositions of the present disclosure may be molded into pellets. The compositions may be molded, foamed, or extruded into various structures or articles by known methods, such as injection molding, overmolding, extrusion, rotational molding, blow molding and thermoforming.

In particular, it is contemplated that the polycarbonate compositions and automotive parts of the present disclosure are used in automotive glazing applications. Non-limiting examples of such articles include multi-layered automotive coatings, sprays, and articles formed via other similar applications. It is noted that in glazing applications, the coating may be uneven in thickness, and so colored pigments may appear to be different colors in different locations. An additional advantage of using the compositions of the present disclosure is that the resulting layer is not required to be the outermost (i.e. exterior) layer. Rather, an additional layer can be placed above to mask the polycarbonate composition. In contrast, colored coatings are usually the top (i.e. outermost) exterior layer. These polycarbonate compositions can be used on transparent automotive parts, for example the roof of the car, a sunroof, a quarter window, a window, the backlite (i.e. rear window), the windshield (i.e. front window), headlight covers, taillight covers, and the like. These can also be used as a layer in the exterior body panels, if desired. These polycarbonate compositions could also be used to make both the fixing layer and the substrate layer. In this regard, it is noted that although the polycarbonate composition may be dark, the layer formed from it can be somewhat transparent (i.e. see-through) or light-transmissive.

The present disclosure further contemplates additional fabrication operations performed on said articles, such as, but not limited to spraying, dipping, 1K or 2K molding, injection molding, and other processes known to one having ordinary skill in the art.

The following examples are provided to illustrate the dark polycarbonate compositions and automotive parts of the present disclosure. The examples are merely illustrative and are not intended to limit the disclosure to the materials, conditions, or process parameters set forth therein.

### EXAMPLES

Table 1 shows the different components of the dark polycarbonate composition according to an exemplary embodiment.

**Table 1.**

| **Ingredient** | **Description** | **Mw** | **Trade name** | **Source** |
|---|---|---|---|---|
| PC105 | Bisphenol-A homopolymer polycarbonate, made by interfacial polymerization | 30,000-31,000 | LEXAN | SABIC Innovative Plastics |
| I-168 | Tris(di-t-butylphenyl)phosphite | 30,000 | Irgafos 168 | Ciba |
| UVA5411 | 2-(2 hydroxy-5-t-octylphenyl) benzotriazole | | UV 5411 | Cytec Industrial Corp. |
| CB | carbon black | | | |
| Solvent Green 3 | 1,4-di-(p-methylaniline)anthraquinone | | | |
| Solvent Red 135 | 8,9,10,11-Tetrachloro-12H-phthaloperin-12-one | | | |
| Pigment Brown 29 | Chromium Iron Oxide | | | Shepherd Chemical Company |

Table 2 shows the Energy Absorption (Ae) of the dark automotive part **100** relative to commercially available materials (Ref. 1-3). Ae has been measured and calculated according to ISO9050. It is assumed that all not reflected or absorbed sunlight by the substrate layer **104** (with polycarbonate and infrared reflective additive) and/or the above layers **106**, **108** is being absorbed by the fixing layer **102.**

Materials utilizing currently available technology were compared for energy absorption. A transparent material is included for comparison in Reference 1, which has no colorant. A current common approach for giving a darker color to automotive parts involves addition of carbon black (Reference 2). Addition of carbon black provides an Ae of almost 95%. Another state of the art approach involves using pigment to achieve desired colors (Reference 3); these will permit more infrared light to pass through compared to carbon black. Addition of these state of the art pigments provides an Ae of almost 93%.

Using improved infrared reflective pigments, e.g. CI Pigment Brown 29 from Shephard Color Company, in polycarbonate materials according to the present disclosure yields an energy absorption of almost 78%. This demonstrates much improved heat management and therefore should represent fewer failures for dark automotive parts. See Example 1.

**Table 2.**

| | **Unit** | **Ref. 1** | **Ref. 2** | **Ref. 3** | **Example 1** |
|---|---|---|---|---|---|
| PC105 | wt% | 99.65 | 99.15 | 99.35 | 98.35 |
| I-168 | wt% | 0.05 | 0.05 | 0.05 | 0.05 |
| UVA 5411 | wt% | 0.3 | 0.3 | 0.3 | 0.3 |
| CB | wt% | | 0.5 | | |
| Solvent Green 3 | wt% | | | 0.15 | 0.15 |
| Solvent Red 135 | wt% | | | 0.15 | 0.15 |
| Pigment Brown 29 | wt% | | | | 1 |
| Ae | % | 90.3 | 94.4 | 92.6 | 77.9 \| |

Set forth below are some embodiments of the polycarbonate composition and articles made therefrom.

The present disclosure has been described with reference to exemplary embodiments. Obviously, modifications and alterations will occur to others upon reading and understanding the preceding detailed description. It is intended that the present disclosure be construed as including all such modifications and alterations insofar as they come within the scope of the appended claims.

## Claims

1. A polycarbonate composition for an exterior automotive layer, comprising:
a polycarbonate polymer;
an infrared reflective additive ;
a heat stabilizer;
an anti-oxidant; and
a UV-additive;
a dye;
wherein the infrared reflective additive is chromium iron oxide (CI Pigment Brown 29), chromium green black hematite (CI Pigment Green 17), CI Pigment Brown 35 or chrome ion nickel black spinel (CI Pigment Black 30),
wherein the polycarbonate composition has an L-value of 20 or below when measured in the CIELAB color space under DREOLL conditions, and has an Energy Absorption (AE) of less than 90% when measured according to ISO 9050.

2. The polycarbonate composition of claim 1, wherein the dye comprises a coumarin dye; a lanthanide complex; a hydrocarbon dye; a polycyclic aromatic hydrocarbon dye; a scintillation dye; an aryl- or heteroaryl-substituted poly (C2-8) olefin dye; a carbocyanine dye; an indanthrone dye; a phthalocyanine dye; an oxazine dye; a carbostyryl dye; a napthalenetetracarboxylic acid dye; a porphyrin dye; a bis(styryl)biphenyl dye; an acridine dye; an anthraquinone dye; a cyanine dye; a methine dye; an arylmethane dye; an azo dye; an indigoid dye; a thioindigoid dye; a diazonium dye; a nitro dye; a quinone imine dye; an aminoketone dye; a tetrazolium dye; a thiazole dye; a perylene dye, a perinone dye; bis-benzoxazolylthiophene; a triarylmethane dye; a xanthene dye; a thioxanthene dye; a naphthalimide dye; a lactone dye; a fluorophore; a luminescent dye; or a combination comprising at least one of the foregoing dyes.

3. The polycarbonate composition of any of claims 1-2, wherein the dye comprises Solvent Green 3 and Solvent Red 135.

4. The polycarbonate composition of any of claims 1-3, wherein the infrared reflective additive is the chromium iron oxide (CI Pigment Brown 29).

5. The polycarbonate composition of any of claims 1-4, including from 0.1 wt% to 2.0 wt% of the infrared reflective additive.

6. The polycarbonate composition of any of claims 1-5, including from 0.01 wt% to 0.10 wt% of the heat stabilizer, from 0.01 wt% to 0.05 wt% of the anti-oxidant, and from 0.01 wt% to 0.3 wt% of the UV-additive.

7. The polycarbonate composition of any of claims 1-6, wherein the heat stabilizer is tris(di-t-butylphenyl)phosphite, the anti-oxidant is octadecyl-3-(3,5-ditertbutyl-4-hydroxyphenyl)propionate, and the UV additive is either 2-(2 hydroxy-5-t-octylphenyl)benzotriazole or bis[2-hydroxy-5-t-Octyl-3-(benzotriazol-2-yl)phenyl]-methane.

8. The polycarbonate composition of any of claims 1-7, further including from 0.01 wt% to 0.3 wt% of a release agent, wherein the release agent is the palmitic/stearic acid ester of dipentaerythritol/pentaerythritol or is octadecanoic acid, 1,2,3-propanetriyl ester.

9. The polycarbonate composition of any of claims 1-8, wherein the polycarbonate polymer comprises a high molecular weight polycarbonate polymer having a Mw above 25,000 and a low molecular weight polycarbonate polymer having a Mw below 25,000.

10. The polycarbonate composition of any of claims 1-9, wherein the polycarbonate composition has an Energy Absorption (AE) of less than 85% or of less than 80% when measured according to ISO 9050.

11. An exterior automotive part having a layer formed using the polycarbonate composition of any of claims 1-10.

12. The exterior automotive part of claim 11, wherein the part is selected from a roof of a car, a sunroof, a quarter window, a backlite, a windshield, a headlight cover, and a taillight cover.

13. The exterior automotive part of claim 11, further comprising:
a fixing layer comprised of a polymer or a metal;
the polycarbonate layer on the fixing layer;
a transparent layer on the polycarbonate layer; and
optionally further including a weatherproofing layer on the transparent layer.

14. The polycarbonate composition of claim 1, comprising:
from 80 wt% to 99.9 wt% of the polycarbonate polymer;
from 0.5 wt% to 1.0 wt% of the infrared reflective additive;
from 0.01 wt% to 0.10 wt% of the heat stabilizer;
from 0.01 wt% to 0.10 wt% of the anti-oxidant;
from 0.01 wt% to 0.3 wt% of the UV-additive; and
from 0.00001 to 1.0 wt% of the dye;
wherein the polycarbonate composition has an L-value of 20 or below when measured in the CIELAB color space under DREOLL conditions, and has an Energy Absorption (AE) of less than 80% when measured according to ISO 9050.

## Patentansprüche

1. Polycarbonatzusammensetzung für eine Automobilaußenschicht, umfassend:
ein Polycarbonatpolymer;
ein infrarotreflektierendes Additiv;
einen Hitzestabilisator;
ein Antioxidans; und
ein UV-Additiv;
einen Farbstoff;
wobei es sich bei dem infrarotreflektierenden Additiv um Chromeisenoxid (CI-Pigment Brown 29), Chrom-Grün-Schwarz-Hämatit (CI-Pigment Green 17), CI-Pigment Brown 35 oder Chrom-Ion-Nickel-Schwarz-Spinell (CI-Pigment Black 30) handelt,
wobei die Polycarbonatzusammensetzung bei Messung im CIELAB-Farbraum unter DREOLL-Bedingungen einen L-Wert von 20 oder weniger aufweist und bei Messung gemäß ISO 9050 eine Energieabsorption (AE) von weniger als 90 % aufweist.

2. Polycarbonatzusammensetzung nach Anspruch 1, wobei der Farbstoff einen Cumarin-Farbstoff; einen Lanthanoid-Komplex; einen Kohlenwasserstoff-Farbstoff; einen polycyclischen aromatischen Kohlenwasserstoff-Farbstoff; einen Szintillationsfarbstoff; einen aryl- oder heteroarylsubstitutierten Poly(C2-8)olefin-Farbstoff; einen Carbocyanin-Farbstoff; einen Indanthron-Farbstoff; einen Phthalocyanin-Farbstoff; einen Oxazin-Farbstoff; einen Carbostyryl-Farbstoff; einen Napthalintetracarbonsäure-Farbstoff; einen Porphyrin-Farbstoff; einen Bis(styryl)biphenyl-Farbstoff; einen Acridin-Farbstoff; einen Anthrachinon-Farbstoff; einen Cyanin-Farbstoff; einen Methin-Farbstoff; einen Arylmethan-Farbstoff; einen Azo-Farbstoff; einen Indigoid-Farbstoff; einen Thioindigoid-Farbstoff; einen Diazonium-Farbstoff; einen Nitro-Farbstoff; einen Chinonimin-Farbstoff; einen Aminoketon-Farbstoff; einen Tetrazolium-Farbstoff; einen Thiazol-Farbstoff; einen Perylen-Farbstoff, einen Perinon-Farbstoff; Bis-benzoxazolylthiophen; einen Triarylmethan-Farbstoff; einen Xanthen-Farbstoff; einen Thioxanthen-Farbstoff; einen Naphthalimid-Farbstoff; einen Lacton-Farbstoff; einen Fluorophor; einen lumineszierenden Farbstoff; oder eine Kombination umfasst, die mindestens einen der vorstehenden Farbstoffe umfasst.

3. Polycarbonatzusammensetzung nach einem der Ansprüche 1-2, wobei der Farbstoff Solvent Green 3 und Solvent Red 135 umfasst.

4. Polycarbonatzusammensetzung nach einem der Ansprüche 1-3, wobei es sich bei dem infrarotreflektierenden Additiv um das Chromeisenoxid (CI-Pigment Brown 29) handelt.

5. Polycarbonatzusammensetzung nach einem der Ansprüche 1-4, umfassend zu 0,1 Gew.-% bis 2,0 Gew.-% das infrarotreflektierende Additiv.

6. Polycarbonatzusammensetzung nach einem der Ansprüche 1-5, umfassend zu 0,01 Gew.-% bis 0,10 Gew.-% den Hitzestabilisator, zu 0,01 Gew.-% bis 0,05 Gew.-% das Antioxidans und zu 0,01 Gew.-% bis 0,3 Gew.-% das UV-Additiv.

7. Polycarbonatzusammensetzung nach einem der Ansprüche 1-6, wobei es sich bei dem Hitzestabilisator um Tris(di-t-butylphenyl)phosphit handelt, bei dem Antioxidans um Octadecyl-3-(3,5-di-tert-butyl-4-hydroxyphenyl)propionat handelt und bei dem UV-Additiv um entweder 2-(2-Hydroxy-5-t-octylphenyl)benzotriazol oder Bis[2-hydroxy-5-t-octyl-3-(benzotriazol-2-yl)phenyl]-methan handelt.

8. Polycarbonatzusammensetzung nach einem der Ansprüche 1-7, ferner umfassend zu 0,01 Gew.-% bis 0,3 Gew.-% ein Trennmittel, wobei es sich bei dem Trennmittel um den Palmitin/Stearinsäureester von Dipentaerythrit/Pentaerythrit handelt oder um Octadecansäure, 1,2,3-Propantriylester.

9. Polycarbonatzusammensetzung nach einem der Ansprüche 1-8, wobei das Polycarbonatpolymer ein Polycarbonatpolymer von hohem Molekulargewicht mit einem Mw von über 25.000 und ein Polycarbonatpolymer von niedrigem Molekulargewicht mit einem Mw von unter 25.000 handelt.

10. Polycarbonatzusammensetzung nach einem der Ansprüche 1-9, wobei die Polycarbonatzusammensetzung bei Messung gemäß ISO 9050 eine Energieabsorption (AE) von weniger als 85 % oder weniger als 80 % aufweist.

11. Automobilaußenteil mit einer unter Verwendung der Polycarbonatzusammensetzung nach einem der Ansprüche 1-10 gebildeten Schicht.

12. Automobilaußenteil nach Anspruch 11, wobei das Teil ausgewählt ist aus einem Dach eines Autos, einem Schiebedach, einem Ausstellfenster, einer Heckscheibe, einer Windschutzscheibe, einer Frontscheinwerferabdeckung und einer Rücklichtabdeckung.

13. Automobilaußenteil nach Anspruch 11, ferner umfassend:
eine Fixierschicht, die aus einem Polymer oder einem Metall besteht;
die Polycarbonatschicht auf der Fixierungsschicht;
eine transparente Schicht auf der Polycarbonatschicht; und
gegebenenfalls ferner umfassend eine wasserdichtmachende Schicht auf der transparenten Schicht.

14. Polycarbonatzusammensetzung nach Anspruch 1, umfassend:
zu 80 Gew.-% bis 99,9 Gew.-% das Polycarbonatpolymer;
zu 0,5 Gew.-% bis 1,0 Gew.-% das infrarotreflektierende Additiv;
zu 0,01 Gew.-% bis 0,10 Gew.-% den Hitzestabilisator;
zu 0,01 Gew.-% bis 0,10 Gew.-% das Antioxidans;
zu 0,01 Gew.-% bis 0,3 Gew.-% das UV-Additiv; und
zu 0,00001 bis 1,0 Gew.-% den Farbstoff;
wobei die Polycarbonatzusammensetzung bei Messung im CIELAB-Farbraum unter DREOLL-Bedingungen einen L-Wert von 20 oder weniger aufweist und bei Messung gemäß ISO 9050 eine Energieabsorption (AE) von weniger als 80 % aufweist.

## Revendications

1. Composition de polycarbonate pour une couche extérieur d'automobile, comprenant :
un polymère de type polycarbonate ;
un additif réfléchissant l'infrarouge ;
un stabilisateur thermique ;
un antioxydant ; et
un additif UV ;
un colorant ;
dans laquelle l'additif réfléchissant les infrarouges est l'oxyde fer chrome (CI Pigment Brown 29), l'hématite noire verte chrome (CI Pigment Green 17), CI Pigment Brown 35 ou le spinelle noir nickel fer chrome (pigment CI Black 30),
dans laquelle la composition de polycarbonate a une valeur L de 20 ou moins lorsqu'elle est mesurée dans l'espace colorimétrique CIELAB dans des conditions DREOLL, et a une absorption d'énergie (AE) inférieure à 90 % lorsqu'elle est mesurée conformément à la norme ISO 9050.

2. Composition de polycarbonate selon la revendication 1, dans laquelle le colorant comprend un colorant coumarine ; un complexe de lanthanide ; un colorant d'hydrocarbure ; un colorant d'hydrocarbure aromatique polycyclique ; un colorant à scintillation ; un colorant de poly(C2-8)oléfine substituée par aryle ou hétéroaryle; un colorant carbocyanine ; un colorant indanthrone ; un colorant phtalocyanine ; un colorant oxazine ; un colorant carbostyryle ; un colorant acide naphtalènetétracarboxylique ; un colorant porphyrine ; un colorant bis(styryl)biphényle ; un colorant à l'acridine ; un colorant anthraquinone ; un colorant cyanine ; un colorant méthine ; un colorant arylméthane ; un colorant azoïque ; un colorant indigoïde ; un colorant thioindigoïde ; un colorant diazonium ; un colorant nitro ; un colorant quinone imine ; un colorant aminocétone ; un colorant tétrazolium ; un colorant thiazole ; un colorant pérylène, un colorant périnone ; le bis-benzoxazolylthiophène; un colorant triarylméthane ; un colorant xanthène ; un colorant thioxanthène ; un colorant naphtalimide ; un colorant lactone ; un fluorophore ; un colorant luminescent ; ou une combinaison comprenant au moins un des colorants précédents.

3. Composition de polycarbonate selon l'une quelconque des revendications 1 et 2, dans laquelle le colorant comprend Solvent Green 3 et Solvent Red 135.

4. Composition de polycarbonate selon l'une quelconque des revendications 1 à 3, dans laquelle l'additif réfléchissant les infrarouges est l'oxyde de fer chrome (CI Pigment Brown 29).

5. Composition de polycarbonate selon l'une quelconque des revendications 1 à 4, comprenant de 0,1 % en poids à 2,0 % en poids de l'additif réfléchissant les infrarouges.

6. Composition de polycarbonate selon l'une quelconque des revendications 1 à 5, comprenant de 0,01 % en poids à 0,10 % en poids du stabilisateur thermique, de 0,01 % en poids à 0,05 % en poids de l'antioxydant et de 0,01 % en poids à 0,3 % en poids de l'additif UV.

7. Composition de polycarbonate selon l'une quelconque des revendications 1 à 6, dans laquelle le stabilisateur thermique est le tris(di-t-butylphényl)phosphite, l'anti-oxydant est le 3-(3,5-di-tertbutyl-4-hydroxyphényl)propionate d'octadécyle et l'additif UV est soit le 2-(2 hydroxy-5-t-octylphényl)benzotriazole, soit le bis[2-hydroxy-5-t-octyl-3-(benzotriazol-2-yl)phényl]-méthane.

8. Composition de polycarbonate selon l'une quelconque des revendications 1 à 7, comprenant en outre de 0,01 % en poids à 0,3 % en poids d'un agent de libération, dans laquelle l'agent de libération est l'ester d'acide palmitique/stéarique de dipentaérythritol/pentaerythritol ou est de l'ester de 1,2,3-propanetriyle de l'acide octadécanoïque.

9. Composition de polycarbonate selon l'une quelconque des revendications 1 à 8, dans laquelle le polymère de polycarbonate comprend un polymère de polycarbonate de poids moléculaire élevé ayant un Mw supérieur à 25 000 et un polymère de polycarbonate de faible poids moléculaire ayant un Mw inférieur à 25 000.

10. Composition de polycarbonate selon l'une quelconque des revendications 1 à 9, dans laquelle la composition de polycarbonate a une absorption d'énergie (AE) inférieure à 85 % ou inférieure à 80 % lorsqu'elle est mesurée selon la norme ISO 9050.

11. Pièce extérieure d'automobile ayant une couche formée en utilisant la composition de polycarbonate selon l'une quelconque des revendications 1 à 10.

12. Pièce extérieure d'automobile selon la revendication 11, dans laquelle la pièce est sélectionnée parmi un toit de voiture, un toit ouvrant, un quart de fenêtre, un rétroéclairage, un pare-brise, un couvercle de phare et un couvercle de feu arrière.

13. Pièce extérieure d'automobile selon la revendication 11, comprenant en outre :
une couche de fixation composée d'un polymère ou d'un métal ;
la couche de polycarbonate sur la couche de fixation ;
une couche transparente sur la couche de polycarbonate ; et
éventuellement comprenant en outre une couche d'étanchéité aux intempéries sur la couche transparente.

14. Composition de polycarbonate selon la revendication 1, comprenant :
de 80 % en poids à 99,9 % en poids du polymère de type polycarbonate
de 0,5 % en poids à 1,0 % en poids de l'additif réfléchissant les infrarouges ;
de 0,01 % en poids à 0,10 % en poids du stabilisateur thermique;
de 0,01 % en poids à 0,10 % en poids de l'antioxydant ;
de 0,01 % en poids à 0,3 % en poids de l'additif UV ; et
de 0,00001 à 1,0 % en poids du colorant ;
dans laquelle la composition de polycarbonate a une valeur L de 20 ou moins lorsqu'elle est mesurée dans l'espace colorimétrique CIELAB dans des conditions DREOLL, et a une absorption d'énergie (AE) inférieure à 80 % lorsqu'elle est mesurée conformément à la norme ISO 9050.
